# EUROPÄISCHE PATENTSCHRIFT

(11) **EP 1 158 887 B1**
(45) Veröffentlichungstag und Bekanntmachung des Hinweises auf die Patenterteilung: **03.12.2003**
(21) Anmeldenummer: 99968400.4
(22) Anmeldetag: 31.12.1999
(51) Int. Cl.: A47J 39/00

(54) **SPEISENTRANSPORTEINHEIT SOWIE SPEISENTRANSPORTWAGEN ZUR AUFNAHME DERARTIGER SPEISENTRANSPORTEINHEITEN**
MEAL TRANSPORT UNIT AND MEAL TRANSPORT CART FOR RECEIVING MEAL TRANSPORT UNITS OF THIS TYPE
UNITE DE TRANSPORT DE REPAS ET CHARIOT DE TRANSPORT DE REPAS SERVANT A LOGER DE TELLES UNITES

(30) Priorität: 11.03.1999 DE 19910815
(43) Veröffentlichungstag der Anmeldung: 05.12.2001
(73) Patentinhaber: BLANCO GmbH + Co KG, 75038 Oberderdingen (DE)
(72) Erfinder: LERRAHN, Wilfried, D-75056 Sulzfeld (DE)
(74) Vertreter: Hörner, Andreas
(86) Internationale Anmeldenummer: EP9910479
(87) Internationale Veröffentlichungsnummer: WO00053069

(56) Entgegenhaltungen:
- FR-A- 2 662 592
- US-A- 3 982 584
- US-A- 4 386 703

## Beschreibung

Die Erfindung betrifft eine Speisentransporteinheit mit einem Speisentablett und einer haubenartigen Tablettabdeckung, wobei das Speisentablett mehrere definierte Stellplätze zum Abstellen jeweils eines zur Speisenaufnahme vorgesehenen teller- oder schalenartigen Geschirrteils aufweist und die Speisentransporteinheit mit einer Temperiervorrichtung zum Temperieren mindestens eines Teils der Speisen versehen ist.

Ferner betrifft die Erfindung einen Speisentransportwagen mit einem ungefähr quaderförmigen Aufnahmeraum für übereinander im Abstand voneinander angeordnete Fachböden zum Abstellen von jeweils mindestens einer derartigen Speisentransporteinheit.

Derartige Speisentransporteinheiten und Speisentransportwagen sind in der sogenannten Großverpflegung weit verbreitet, insbesondere in Krankenhäusern, Altenheimen und dergleichen. Im allgemeinen werden auf dem Speisentablett einer solchen Speisentransporteinheit mehrere Geschirrteile transportiert, welche die verschiedenen Gänge eines kompletten Menüs aufnehmen, also z. B. eine Suppe in einem ersten Geschirrteil, den gleichfalls insbesondere warm zu verzehrenden Hauptgang des Menüs in einem zweiten Geschirrteil, sowie einen Salat und ein Dessert in einem dritten bzw. vierten Geschirrteil. Bei den Geschirrteilen kann es sich um herkömmliche Porzellanteile handeln, aber auch um teller- oder schalenartige Speisenaufnahmeteile aus Kunststoff oder beispielsweise einer hinreichend steifen Metallfolie.

Da in allen hier in Betracht kommenden Fällen die in einer Großküche zubereiteten Speisen über längere Zeiten kühl gehalten, mindestens Teile eines Menüs vor dem Verzehr jedoch wieder erhitzt werden müssen, sind schon Einrichtungen bekannt geworden, mit denen sich die warm zu verzehrenden Speisen auf bzw. in einer solchen Speisentransporteinheit erhitzen lassen. Auf diese bekannten Einrichtungen wird im folgenden noch näher einzugehen sein.

Bislang ist der übliche Ablauf der Speisenzubereitung und - Verteilung der folgende: Nach dem Kochen der zu garenden Speisen werden diese in einem Kühlraum oder Froster schockgekühlt und sodann in kaltem Zustand portioniert, wobei für letzteres ein klimatisierter Arbeitsraum erforderlich ist; die portionierten und in Speisentransporteinheiten der vorstehend erwähnten Art eingebrachten Speisen werden mittels eines Speisentransportwagens z. B. auf die verschiedenen Stationen eines Krankenhauses gefahren, sollten dort aber oft über eine nicht unbeträchtliche Zeit noch kühl gehalten werden können, ehe die warm zu verzehrenden Speisen auf der Station erwärmt und sodann die einzelnen Speisentransporteinheiten an die Patienten verteilt werden.

Für das Erwärmen der in den Speisentransporteinheiten kühl gehaltenen Speisen stehen verschiedene bekannte Einrichtungen zur Verfügung:

Neuerdings verhältnismäßig weit verbreitet sind Speisentransportwagen der eingangs erwähnten Art mit in die Fachböden integrierten Induktionsspulen (samt zugeordneten Temperatursensoren), wobei sich die Induktionsspulen unter den Stellplätzen der auf den Fachböden abzustellenden Speisentabletts befinden; zumindest die für die Aufnahme zu erwärmender Speisen vorgesehenen Geschirrteile sind am Boden metallbeschichtet, vorzugsweise auch clochenartige Abdeckungen für diese Geschirrteile, so daß sich die Geschirrteile mit den unter ihnen befindlichen Induktionsspulen, die clochenartigen Abdeckungen mit den Induktionsspulen des darüber befindlichen Fachbodens erhitzen lassen.

Bei einer anderen bekannten Einrichtung sind in die Böden der Geschirrteile elektrische Widerstandsheizungen integriert, und an der Unterseite der Geschirrteilböden befinden sich jeweils zwei elektrische Kontakte zum Aufsetzen auf zwei entsprechende elektrische Kontakte an der Oberseite des Speisentabletts, welches z. B. über Steckverbindungen mit einer Stromversorgung des Speisentransportwagens verbunden werden kann.

Ein bislang ungelöstes Problem stellt es dar, die Speisen zwischen der Portionierung und der Erwärmung der warm zu verzehrenden Speisen kühl und dadurch in einwandfreiem Zustand zu halten, ohne den ganzen Aufnahmeraum der Speisentransportwagen und die ganzen "Frachträume" der Speisentransporteinheiten zu kühlen oder die in den Speisentransportwagen auf eine Station beförderten Speisentransporteinheiten dort den Speisentransportwagen wieder zu entnehmen und in einem Kühlraum, Kühlschrank oder dergleichen kühl zu halten, bis kurz vor der Speisenausgabe die warm zu verzehrenden Speisen erhitzt werden.

Aus der US-A-3 952 794 ist eine Speisentransporteinheit mit einem Speisentablett und einer haubenartigen Tablettabdeckung bekannt, wobei das Speisentablett mehrere definierte Stellplätze zum Abstellen jeweils eines zur

Speisenaufnahme vorgesehenen Teller- oder schalenartigen Geschirrteils aufweist und die Speisentransporteinheit Mittel zum Temperieren mindestens eines Teils der Speisen umfaßt, welche mindestens einen Fluid-Strömungskanal umfassen.

Die WO-A-9962390, welche gemäß Art. 54(3) und (4) EPÜ als Stand der Technik nur bei der Prüfung auf Neuheit zu berücksichtigen ist, offenbart eine Speisentransporteinheit mit einem Speisentablett und einer haubenartigen Tablettabdeckung, wobei das Speisentablett einen ersten Stellplatz für kühl zu verzehrende Speisen sowie mindestens einen zweiten Stellplatz für warm zu verzehrende Speisen aufweist und die Tablettabdeckung an ihrer Unterseite einen nach unten ragenden barriereartigen und wärmeisolierenden Vorsprung aufweist, welcher zwischen dem ersten und dem zweiten Stellplatz verläuft.

Aus der FR-A-2 662 592 ist eine Speisentransporteinheit gemäß dem Oberbegriff von Anspruch 1 bekannt.

Der Erfindung lag die Aufgabe zugrunde, für ein Speisenverteilungssystem, welches sich Speisentransporteinheiten der eingangs erwähnten Art bedient, eine einfachere und energiesparendere Möglichkeit zur Kühlung der zubereiteten Speisen zu schaffen, und zwar insbesondere zur Kühlung bis zu dem Zeitpunkt, in dem die warm zu verzehrenden Speisen erhitzt werden.

Diese Aufgabe wird erfindungsgemäß durch eine Speisentransporteinheit gemäß Anspruch 1 gelöst.

In diese Speisentransporteinheit, und zwar insbesondere in deren Tablettabdeckung, ist mindestens ein Fluid-Strömungskanal integriert, welcher bei auf das Tablett aufgesetzter Tablettabdeckung an dem ersten Stellplatz für kühl zu verzehrende Speisen und an dem zweiten Stellplatz für warm zu verzehrende Speisen vorbeiläuft. Obwohl Fluid-Strömungskanäle grundsätzlich in die Speisentabletts integriert werden könnten, ist es vorteilhafter, solche Strömungskanäle in die Tablettabdeckungen zu integrieren, und zwar vorzugsweise nur in diese.

Ist der Fluid-Strömungskanal gegenüber dem von Speisentablett und Tablettabdeckung definierten Innenraum der Speisentransporteinheit geschlossen, so daß die Speisen mit dem zur Temperierung eingesetzten Fluid nicht in Kontakt kommen können, kann zur Kühlung eine Kühlsole oder eine andere für eine Kühlung geeignete Flüssigkeit eingesetzt werden, wird hingegen als Fluid gekühlte Luft verwendet, kann der Fluid-Strömungskanal zum Innenraum der Speisentransporteinheit zu auch offen sein, und zwar insbesondere dann, wenn, wie dies häufig der Fall ist, die der Speisenaufnahme dienenden telleroder schalenartigen Geschirrteile jeweils durch eine haubenartige Cloche abgedeckt sind, durch die auch verhindert wird, daß bei der Handhabung der Speisentransporteinheiten Flüssigkeiten aus den Geschirrteilen herausschwappen.

Grundsätzlich können die Fluid-Strömungskanäle der erfindungsgemäßen Speisentransporteinheiten aber auch zur Erwärmung der Speisen herangezogen werden, wobei dann ein geeignetes Wärmeträgerfluid, z. B. auch erhitzte Luft, durch die Strömungskanäle hindurchgeführt werden kann.

Für die Durchströmung der Fluid-Strömungskanäle der Speisentransporteinheiten gibt es eine ganze Reihe von Möglichkeiten: Beim Einschieben der Speisentransporteinheiten in einen Speisentransportwagen können die Fluid-Strömungskanäle über geeignete Verbindungsvorrichtungen, welche vorzugsweise als Steckverbindungen ausgebildet sind, mit einem Fluid-Versorgungssystem verbunden werden, welches insgesamt oder nur zum Teil im Speisentransportwagen untergebracht ist (im letztgenannten Fall muß der Speisentransportwagen seinerseits natürlich an die anderen Systemkomponenten angeschlossen werden), bei einer unter gewissen Umständen recht vorteilhaften Ausführungsform kann aber für jede Speisentransporteinheit auch eine eigene Fluid-Temperiereinheit vorgesehen werden, welche sich lösbar mit der Speisentransporteinheit verbinden läßt und insbesondere die folgenden Komponenten enthält: ein oder mehrere Peltier-Elemente zum Kühlen, gegebenenfalls aber auch zum Erwärmen eines Fluids, vorzugsweise von Luft, mit dem Fluid und der Umgebungsluft in Kontakt stehende Wärmetauschmittel, einen Ventilator oder eine Pumpe zum Umwälzen des Fluids, sowie einen Fluidauslaß und einen Fluideinlaß zum Anschließen an einen Fluideinlaß bzw. einen Fluidauslaß der Speisentransporteinheit, so daß letztere zusammen mit der Fluid-Temperiereinheit einen Fluid-Kreislauf bildet. Bei einer solchen Ausführungsform läßt sich die zu erreichende Temperatur für jede Speisentransporteinheit individuell einregeln, wenn die Speisentransporteinheit oder die Fluid-Temperiereinheit einen Temperatursensor und die Fluid-Temperiereinheit Temperatureinstellmittel aufweist.

Mit Hilfe erfindungsgemäßer Speisentransporteinheiten lassen sich die zubereiteten und portionierten Speisen in den Speisentransporteinheiten sogar schockkühlen, aber auch auf einfache und energiesparende Weise über längere Zeiten kühl halten, z. B. auf einer Lagerungstemperatur von nur 2°C; verfügen die Speisentransporteinheiten und/oder der Speisentransportwagen auch noch über Heizeinrichtungen zum Erhitzen der warm zu verzehrenden Speisen sowie gegebenenfalls zum Aufwärmen derjenigen Speisen, die zwar in kühlem Zustand, jedoch nicht bei der Lagerungstemperatur verzehrt werden, kann auch das Erhitzen bzw. Aufwärmen einfach und energiesparend erfolgen. Als Heizeinrichtungen sind dabei folgende Ausführungen besonders empfehlenswert: In das Speisentablett werden am Ort seiner Stellplätze elektrische Widerstandsheizungen mit zugeordneten Temperatursensoren integriert, um auf den Stellplätzen abgestellte Geschirrteile durch Wärmeübergang zu beheizen; zusätzlich oder alternativ könnten in die Tablettabdeckung über den Stellplätzen des Tabletts Widerstandsheizungen integriert werden. Bei den elektrischen Widerstandsheizungen kann es sich beispielsweise um bekannte Folienheizelemente oder Dickschicht-Heizelemente handeln. Als Heizeinrichtungen können aber auch die vorstehend beschriebenen bekannten Heizeinrichtungen Verwendung finden.

Wie sich aus den vorstehenden Erläuterungen ergibt, besteht im allgemeinen die Problematik, daß sich in einer Speisentransporteinheit sowohl warm, als auch kalt oder kühl zu verzehrende Speisen befinden, so daß nach der Phase des Kühlhaltens der Speisen die warm zu verzehrende Speise oder Speisen selektiv aufgeheizt werden muß bzw. müssen. Für diesen Fall empfehlen sich die folgenden Ausführungsformen der erfindungsgemäßen Speisentransporteinheit:

Mindestens die für warm zu verzehrende Speisen vorgesehenen Stellplätze sind mit Heizeinrichtungen versehen und der dem Kühlhalten der Speisen dienende Fluid-Strömungskanal erstreckt sich über alle Stellplätze, so daß nach dem Abschalten der Fluidströmung die warm zu verzehrenden Speisen aufgeheizt werden können, während die anderen Speisen kühl bleiben.
Die Tablettabdeckung und/oder das Speisentablett weist an ihrer bzw. seiner Unterseite mindestens einen nach unten bzw. oben ragenden barriereartigen und wärmeisolierenden Vorsprung auf, welcher zwischen den Stellplätzen für kühl zu verzehrende Speisen und den Stellplätzen für warm zu verzehrende Speisen verläuft. Da der Fluid-Strömungskanal zu dem von Speisentablett und Tablettabdeckung begrenzten Innenraum der Speisentransporteinheit hin offen ist bildet dieser barriereartige Vorsprung zweckmäßigerweise eine Seitenwand oder mindestens einen Seitenwandbereich des Fluid-Strömungskanals.

Weitere Verbesserungen der erfindungsgemäßen Speisentransporteinheit ergeben sich aus den beigefügten Ansprüchen 2 bis 11.

Die Ansprüche 12 und 13 betreffen jeweils eine Kombination einer erfindungsgemäßen Speisentransporteinheit und mindestens eines Geschirrteils.

Die Ansprüche 14 bis 16 betreffen eine Kombination mindestens einer erfindungsgemäßen Speisentransporteinheit und eines Speisentransportwagens.

Im folgenden sollen anhand der beigefügten Zeichnung zwei besonders vorteilhafte Ausführungsformen der erfindungsgemäßen Speisentransporteinheit sowie eine besonders vorteilhafte Ausführungsform des erfindungsgemäßen Speisentransportwagens näher erläutert werden; in der Zeichnung zeigen:
- Fig. 1: eine erste Ausführungsform der erfindungsgemäßen Speisentransporteinheit, teilweise im Schnitt und teilweise in einer Stirnansicht (entsprechend der Linie 1-1 in Fig. 2);
- Fig. 2: eine Schnittdarstellung dieser Speisentransporteinheit entsprechend der Linie 2-2 in Fig. 1, sowie von an die Speisentransporteinheit angrenzenden Mitteln zur Beschickung der Speisentransporteinheit mit Kühlluft;
- Fig. 3: einen vertikalen Schnitt durch einen mehrere erfindungsgemäße Speisentransporteinheiten aufnehmenden Speisentransportwagen;
- Fig. 4: diesen Speisentransportwagen in einem vertikalen Schnitt längs einer Ebene, welche senkrecht zu der für die Fig. 3 gewählten Schnittebene verläuft, und
- Fig. 5 und 6: den Figuren 1 und 2 entsprechende Darstellungen einer nicht erfindungsgemäßen Speisentransporteinheit.

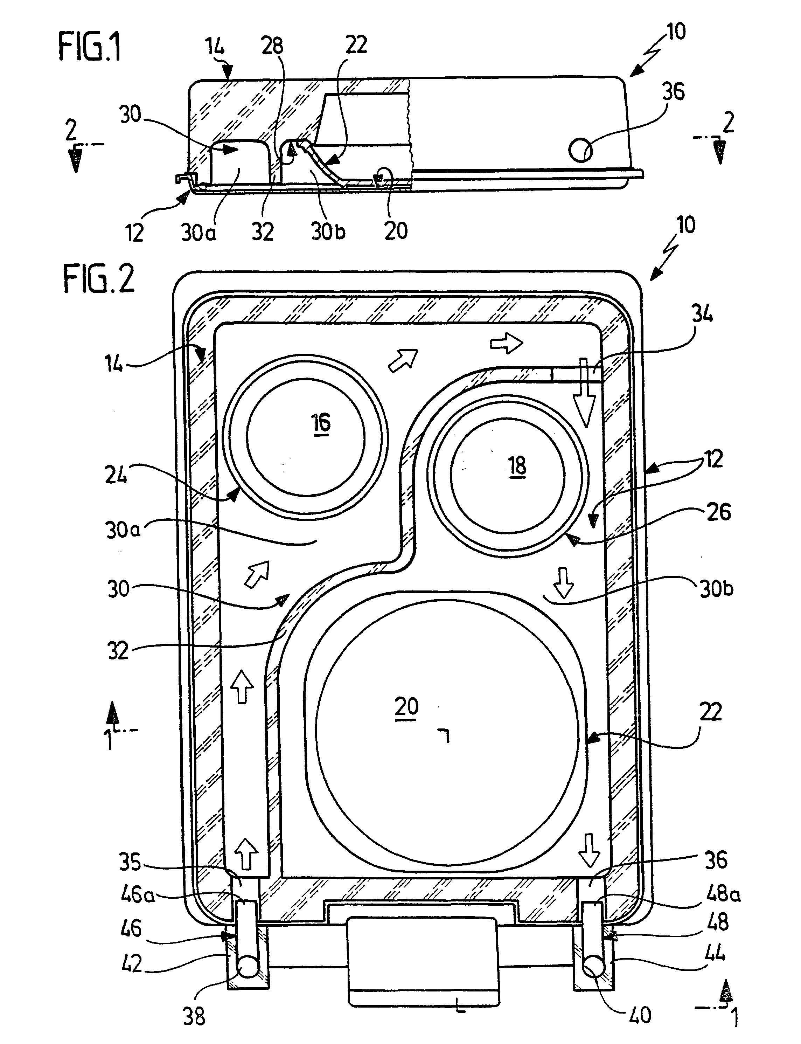

Die Figuren 1 und 2 zeigen eine Speisentransporteinheit 10 mit einem Speisentablett 12 sowie einer Tablettabdeckung 14; bei dem Speisentablett 12 handelt es sich vorzugsweise um ein Kunststoff-Tiefziehteil, ein Kunststoff-Preßformteil oder ein Schaumkunststoff-Formteil, d. h. um ein Teil mit guten elektrischen und thermischen Isoliereigenschaften, während man die Tablettabdeckung 14 vorteilhafterweise als Schaumkunststoff-Formteil gestaltet, so daß auch die Tablettabdeckung aus einem wärmeisolierenden Werkstoff besteht und sich auf ihrer Unterseite mit der gewünschten, verhältnismäßig komplizierten Kontur versehen läßt, welche im folgenden noch näher beschrieben werden wird.

In Fig. 2 wurden verschiedene Stellplätze des Speisentabletts 12 mit 16, 18 und 20 bezeichnet; diese Stellplätze können auf dem Speisentablett z. B. durch einen entsprechenden Aufdruck, aber auch durch eine eingeformte Vertiefung markiert und definiert werden, wobei im Falle einer Vertiefung diese in Größe und Gestalt an die Unterseite des auf dem betreffenden Stellplatz abzustellenden Geschirrteils angepaßt ist. Ein solches teller- oder schalenartiges Geschirrteil 22 ist in Fig. 1 im Schnitt dargestellt. Der Stellplatz 16 soll für ein Geschirrteil zur Aufnahme einer kühl zu verzehrenden Speise vorgesehen sein, während auf den Stellplätzen 18 und 20 Geschirrteile zur Aufnahme von warm zu verzehrenden Speisen abgestellt werden sollen. Die auf den Stellplätzen 16 und 18 abgestellten Geschirrteile 24 bzw. 26 sind in Fig. 2 in der Draufsicht dargestellt.

Jedes der teller- oder schalenartigen Geschirrteile 22, 24 und 26 könnte mit einer eigenen, hauben- oder clochenartigen Abdeckung abgedeckt sein, welche auf das betreffende Geschirrteil aufgelegt ist und unter anderem dem Zweck dient, beim Handhaben der Speisentransporteinheit ein Herausschwappen von Flüssigkeiten aus den Geschirrteilen zu verhindern. Bei der in den Figuren 1 und 2 dargestellten bevorzugten Ausführungsform übernimmt diese Aufgabe jedoch die Tablettabdeckung 14, welche an ihrer Unterseite über Oberflächenbereiche 28 verfügt, welche bei auf das Speisentablett 12 aufgesetzter Tablettabdeckung 14 abdichtend gegen die oberen Ränder der teller- oder schalenartigen Geschirrteile 22, 24, und 26 anliegen, und zwar vorzugsweise unter dem Eigengewicht der Tablettabdeckung 14.

In die Unterseite der Tablettabdeckung 14 ist ein als Ganzes mit 30 bezeichneter Fluid-Strömungskanal eingeformt, welcher, wie die Fig. 1 erkennen läßt, nach unten hin offen ist und, wie sich aus Fig. 2 ergibt, zwei Kanalabschnitte 30a und 30b umfaßt, zwischen denen ein barriereartiger Vorsprung 32 verläuft, welcher die Gestalt eines an die Tablettabdeckung 14 angeformten und nach unten ragenden Stegs besitzt und eine Seitenwand sowohl des Kanalabschnitts 30a, als auch des Kanalabschnitts 30b bildet. Dort wo der Kanalabschnitt 30a in den Kanalabschnitt 30b übergeht, läßt der barriereartige Vorsprung 32 eine Durchtrittsöffnung 34 für die als Fluid verwendete Kühlluft offen. Das Geschirrteil 24, welches auf dem sich im Bereich des Kanalabschnitts 30a befindlichen Stellplatz 16 abgestellt ist, soll nun eine kühl zu verzehrende Speise, beispielsweise ein Dessert, aufnehmen, während die Geschirrteile 22 und 26, welche auf den sich im Bereich des Kanalabschnitts 30b befindenden Stellplätzen 20 und 18 abgestellt sind, einen warm zu verzehrenden Hauptgang bzw. eine warm zu verzehrende Suppe enthalten können.

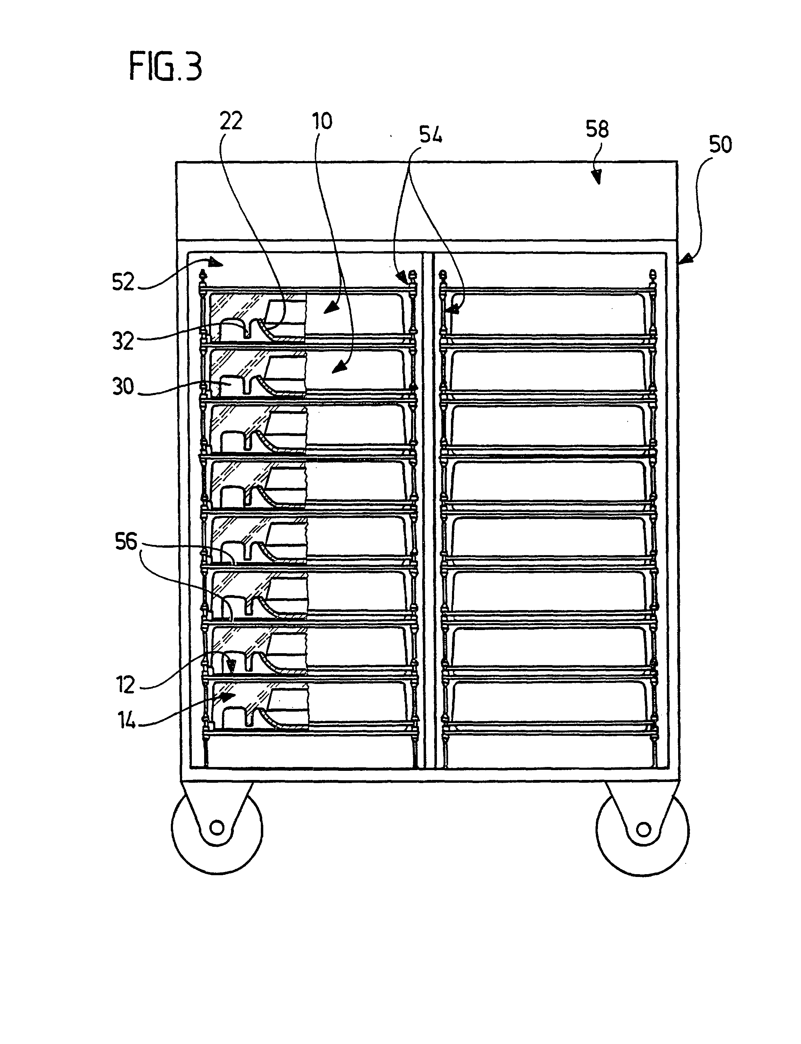

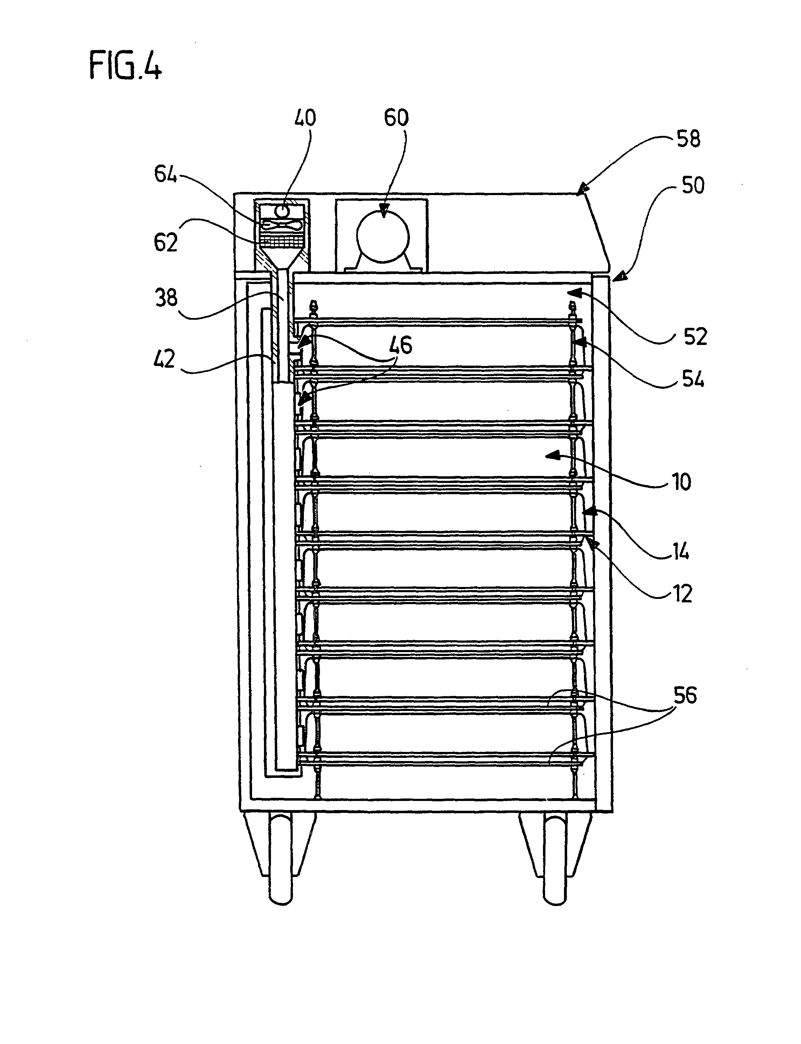

Die Tablettabdeckung 14 verfügt über einen Kühlluft-Einlaß 35 sowie einen Kühlluft-Auslaß 36, wobei der erstere in den Kanalabschnitt 30a mündet, der Kühlluft-Auslaß 36 in den Kanalabschnitt 30b. Die Fig. 2 zeigt schließlich noch einen Kühlluft-Vorlaufkanal 38 und einen Kühlluft-Rücklaufkanal 40, welche beide rohrartig ausgebildet und in einer Wärmeisolierung 42 bzw. 44 untergebracht sind; auf diese Elemente soll anhand der Figuren 3 und 4 noch näher eingegangen werden. Für die Kühlluft ist ein gleichfalls nachfolgend noch weiter zu beschreibender Kühlluft-Kreislauf vorgesehen, zu dem der Vorlaufkanal 38 und der Rücklaufkanal 40 ebenso gehören wie die Fluid-Strömungskanäle 30 mehrerer Speisentransporteinheiten 10, wobei in geeigneter und nicht näher dargestellter Weise fluiddicht gestaltete Steckverbindungen 46 und 48 dazu dienen, die einzelnen Speisentransporteinheiten 10 an den Vorlaufkanal 38 und den Rücklaufkanal 40 anzuschließen, wenn die Speisentransporteinheiten 10 mit ihren Kühlluft-Einlässen und - Auslässen 35 bzw. 36 gemäß Fig. 2 von rechts nach links auf Rohrstutzen 46a und 48a, welche am Vorlaufkanal 38 bzw. am Rücklaufkanal 40 fest angebracht sind und in den betreffenden Kanal münden, aufgeschoben werden.

Die Richtung, in der die Kühlluft den Fluid-Strömungskanal 30 durchströmt, ist in Fig. 2 durch Pfeile angedeutet.

Bei einer Speisentransporteinheit, welche im wesentlichen so konzipiert ist, wie die in den Figuren 1 und 2 dargestellte Speisentransporteinheit, sollte der Fluid-Strömungskanal mindestens im Bereich der Stellplätze für vom Fluid zu umströmende Geschirrteile einen größeren Querschnitt aufweisen als diese Geschirrteile.

Erfindungsgemäß sollen mindestens die Stellplätze 18 und 20 bzw. die Geschirrteile 26 und 22 mit Heizeinrichtungen oder Bestandteilen solcher Heizeinrichtungen versehen sein, wie dies vorstehend beschrieben wurde. Wenn dann die in den Geschirrteilen 22 und 26 enthaltenen Speisen aufgeheizt werden sollen, wird der Kühlluftstrom abgeschaltet, worauf die Heizeinrichtungen für die Geschirrteile 22 und 26 eingeschaltet werden. Der barriereartige und wärmeisolierende Vorsprung 32 verhindert dann, daß sich die im Geschirrteil 24 befindliche und kühl zu verzehrende Speise während des Aufheizens der in den Geschirrteilen 22 und 26 enthaltenen Speisen in unerwünschter Weise erwärmt.

Der in den Figuren 3 und 4 dargestellte erfindungsgemäße Speisentransportwagen 50 hat einen ungefähr quaderförmigen Aufnahmeraum 52, in den sich Gestelle 54 einsetzen lassen, welche über mehrere übereinander im Abstand voneinander angeordnete Fachböden 56 verfügen, auf denen sich jeweils mindestens eine Speisentransporteinheit 10 abstellen läßt, indem man diese Speisentransporteinheiten zwischen die Fachböden einschiebt - zu diesem Zweck besitzt der Speisentransportwagen 50 in nicht dargestellter Weise an einer seiner Seiten eine Be- und Entladeöffnung sowie eine die letztere verschließende Tür. Oberhalb des Aufnahmeraums 52 ist ein Oberteil 58 des Speisentransportwagens 50 angeordnet, welches Mittel zum Kühlen der umzuwälzenden Kühlluft, Fördermittel für die Kühlluft sowie die erforderliche Schalt- und Regelvorrichtung für den Kühlluftkreislauf aufnimmt. Insbesondere beinhaltet das Wagenoberteil 58 einen Kältemittelkreislauf zum Abkühlen der umzuwälzenden Kühlluft, welcher einen Kältemittelkompressor 60 und einen Verdampfer 62 für das Kältemittel umfaßt. Der Verdampfer 62 liegt im Kühlluftkreislauf stromaufwärts des im Speisentransportwagen 50 fest angebrachten Kühlluft-Vorlaufkanals 38 und stromabwärts eines der Umwälzung der Kühlluft dienenden Ventilators 64, so daß in den Kühlluft-Vorlaufkanal 38 abgekühlte Kühlluft eingespeist wird.

Wie sich aus der vorstehenden Beschreibung der Erfindung ergibt, macht diese einen separaten Kühlraum zum kühl Lagern der bereits portionierten Speisen entbehrlich, der konventionelle Ablauf der Speisenzubereitung und -verteilung muß nicht grundsätzlich geändert, kann aber in sehr vorteilhafter Weise dadurch verändert werden, daß die zubereiteten und sodann portionierten Speisen in der gekühlten Speisentransporteinheit schockgekühlt werden, so daß sowohl der eingangs erwähnte Kühlraum oder Froster sowie der für eine Portionierung der Speisen im kalten Zustand erforderliche klimatisierte Arbeitsraum entfallen kann, und schließlich ist es nicht erforderlich, den gesamten Frachtraum (Aufnahmeraum) des Speisentransportwagens zu kühlen, so daß die Erfindung nicht nur Einsparungen bei den Investitionen ermöglicht, sondern auch geringere Energiekosten.

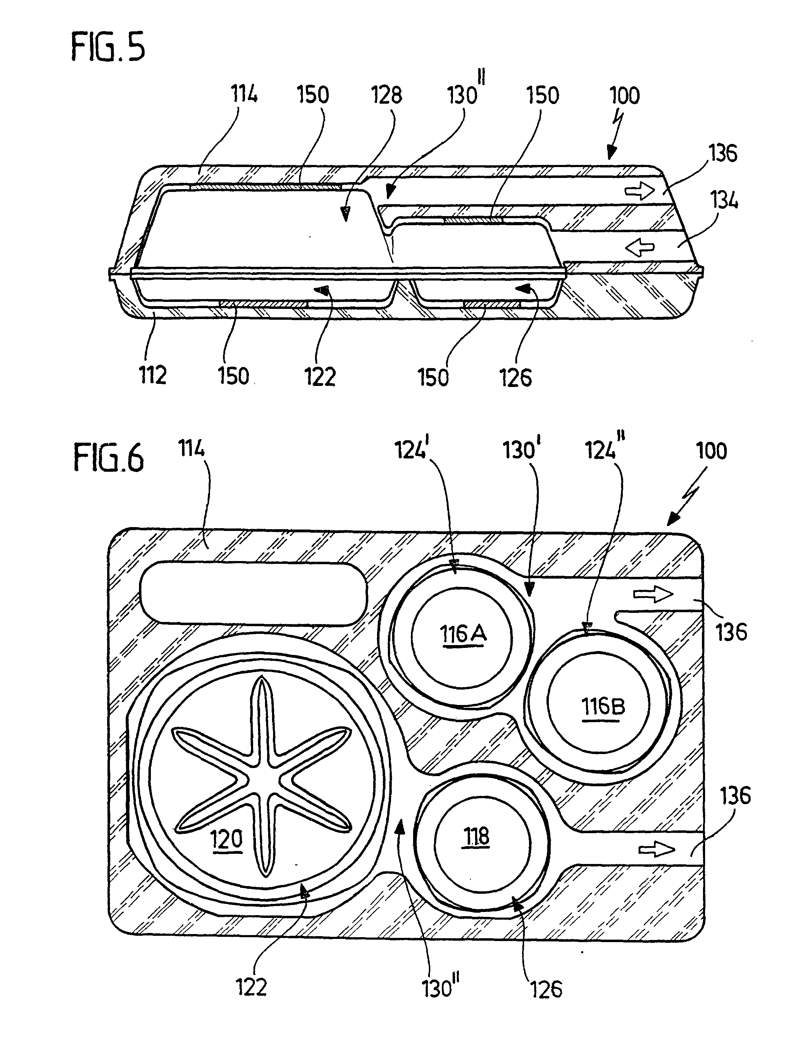

Die in den Figuren 5 und 6 dargestellte nicht erfindungsgemäßen Speisentransporteinheit soll im folgenden nur noch insoweit beschrieben werden, als dies für das Verständnis der Abweichungen von der in den Figuren 1 und 2 dargestellten Ausführungsform erforderlich ist. Deshalb wurden in den Figuren 5 und 6, soweit möglich, dieselben Bezugszeichen wie in den Figuren 1 und 2 verwendet, jedoch um "100" erhöht.

Die in den Figuren 5 und 6 gezeigte Speisentransporteinheit 100 weist auf ihrem Speisentablett 112 vier Stellplätze 116A, 116B, 118 und 120 auf, von denen die Stellplätze 116A und 116B für kalt zu verzehrende Speisen, die Stellplätze 118 und 120 für warm zu verzehrende Speisen vorgesehen sein sollen.

Die beiden zeichnerisch dargestellten Speisentranspprteinheiten unterscheiden sich nun voneinander in zwei wesentlichen Punkten:

Für diejenigen Stellplätze, auf denen Geschirrteile mit kalt oder kühl zu verzehrenden Speisen abgestellt werden sollen, und für Stellplätze für Geschirrteile mit warm zu verzehrenden Speisen ist jeweils ein separater Fluid-Strömungskanal vorgesehen, nämlich für die erstgenannten Stellplätze der Strömungskanal 130', für die anderen Stellplätze der Strömungskanal 130". Jeder dieser Strömungskanäle verfügt über einen Kühlluft-Einlaß 134 sowie einen Kühlluft-Auslaß 136, wobei die Figuren 5 und 6 nur einen Teil der Ein- und Auslässe darstellen. Durch diese Maßnahme können die kalt oder kühl zu verzehrenden Speisen auch noch über denjenigen Zeitraum hinweg gekühlt werden, während dessen die warm zu verzehrenden Speisen erhitzt werden, oder kann auf unterschiedliche Temperaturen gekühlt werden.

Ferner dient bei der Speisentransporteinheit 100 die Tablettabdeckung 114 nicht als "Deckel" für die teller- oder schalenartigen Geschirrteile 124', 124", 122 und 126; vielmehr sind für diese Geschirrteile auf diese aufzusetzende hauben- oder clochenartige Abdeckungen vorgesehen, von denen die einzige, in Fig. 5 gezeichnete Abdeckung mit 128 bezeichnet wurde - diese bildet jedoch zwei zusammenhängende Clochen für die Geschirrteile 122 und 126.

Schließlich zeigt die Fig. 5 noch Metallauflagen 150 an der Unterseite der Böden der Geschirrteile sowie auf der Oberseite der Clochen. Diese Metallauflagen erlauben es zum einen, warm zu verzehrende Speisen in der eingangs beschriebenen Weise induktiv aufzuheizen, und zum anderen läßt die

Fig. 5 erkennen, daß durch derartige "Abstandshalter" bei entsprechender Gestaltung der Fluid-Strömungskanäle die die Speisen aufnehmenden Hohlräume zumindest nahezu allseitig von dem kühlenden Fluid umströmt werden können.

Wie sich aus der vorgehenden Beschreibung ergibt, wird zwar unter dem Begriff "Temperieren" im allgemeinen ein Kühlen bzw. Kühlhalten verstanden, und zwar vorzugsweise mittels gekühlter Luft, die erfindungsgemäße Speisentransporteinheit und der erfindungsgemäße Speisentransportwagen erlauben es aber auch, Speisen mittels eines geeigneten Fluids zusätzlich oder alternativ zu erhitzen.

Bei bis auf einen Ein- und Auslaß geschlossenen Fluid-Strömungskanälen muß natürlich dafür Sorge getragen werden, daß mindestens der den zu temperierenden Speisen zugekehrte Bereich der Kanalwand einen guten Wärmeübergang gewährleisten kann.

## Patentansprüche

1. Speisentransporteinheit mit einem Speisentablett (12) und einer haubenartigen Tablettabdeckung (14), wobei das Speisentablett mehrere definierte Stellplätze (16, 18, 20) zum Abstellen jeweils eines zur Speisenaufnahme vorgesehenen teller- oder schalenartigen Geschirrteils (22, 24, 26) aufweist und die Speisentransporteinheit (10) Mittel zum Temperieren mindestens eines Teils der Speisen umfaßt, welche mindestens einen Fluid-Strömungskanal (30) umfassen, wobei das Speisentablett und die haubenartige Tablettabdeckung ein Gehäuse der Speisentransporteinheit bilden und der mindestens eine Fluid-Strömungskanal in das Gehäuse integriert ist und
das Speisentablett mindestens einen ersten Stellplatz (16) für kühl zu verzehrende Speisen sowie mindestens einen zweiten Stellplatz (18, 20) für warm zu verzehrende Speisen aufweist und die Tablettabdeckung an ihrer Unterseite mindestens einen nach unten ragenden barriereartigen und wärmeisolierenden Vorsprung (32) aufweist, welcher zwischen dem ersten und dem zweiten Stellplatz verläuft, **dadurch gekennzeichnet, daß** der Fluid-Strömungskanal (30) zwei Kanalabschnitte (30a, 30b) umfaßt, wobei der erste Stellplatz (16) für kühl zu verzehrende Speisen und der zweite Stellplatz (18, 20) für warm zu verzehrende Speisen in jeweils einem der Kanalabschnitte (30a, 30b) angeordnet sind und die beiden Kanalabschnitte (30a, 30b) nacheinander von einem die Speisentransporteinheit (10) durchströmenden Fluid durchströmt werden.

2. Speisentransporteinheit nach Anspruch 1, **dadurch gekennzeichnet, daß** der Fluid-Strömungskanal (30) in die Tablettabdeckung (14) integriert ist und bei auf das Tablett (12) aufgesetzter Tablettabdeckung über mindestens den ersten und den zweiten Stellplatz (16, 18, 20) verläuft.

3. Speisentransporteinheit nach Anspruch 1 oder 2, **gekennzeichnet durch** einen Fluideinlaß (35) und einen Fluidauslaß (36), welche über den Fluid-Strömungskanal (30) miteinander in Verbindung stehen.

4. Speisentransporteinheit nach den Ansprüchen 2 und 3, **dadurch gekennzeichnet, daß** Fluideinlaß (35) und -auslaß (36) in der Tablettabdeckung (14) vorgesehen sind.

5. Speisentransporteinheit nach einem oder mehreren der Ansprüche 2 bis 4, **dadurch gekennzeichnet, daß** die Tablettabdeckung (14) mindestens im wesentlichen aus einem wärmeisolierenden Werkstoff besteht.

6. Speisentransporteinheit nach Anspruch 5, **dadurch gekennzeichnet, daß** die Tablettabdeckung (14) ein Schaumkunststoff-Formteil ist.

7. Speisentransporteinheit nach einem oder mehreren der Ansprüche 1 bis 6, **dadurch gekennzeichnet, daß** das Speisentablett (12) mindestens im wesentlichen aus einem wärmeisolierenden Werkstoff besteht.

8. Speisentransporteinheit nach einem oder mehreren der Ansprüche 2 bis 7, **dadurch gekennzeichnet, daß** bei oben fluiddicht verschlossenen Geschirrteilen (22, 24, 26) der Fluid-Strömungskanal (30) der Tablettabdeckung (14) als nach unten offener Kanal gestaltet ist, welcher mindestens im Bereich des Stellplatzes (16, 18, 20) für ein Geschirrteil für eine zu temperierende Speise einen größeren Querschnitt aufweist als dieses Geschirrteil.

9. Speisentransporteinheit nach einem der Ansprüche 1 bis 8, **dadurch gekennzeichnet, daß** der barriereartige Vorsprung (32) einen Seitenwandbereich des Fluid-Strömungskanals (30) bildet.

10. Speisentransporteinheit nach einem oder mehreren der Ansprüche 1 bis 9, **dadurch gekennzeichnet, daß** der mindestens eine Fluid-Strömungskanal (30) an allen Stellplätzen (16, 18, 20) vorbeiläuft.

11. Speisentransporteinheit nach einem oder mehreren der Ansprüche 1 bis 10, **dadurch gekennzeichnet, daß** mindestens einer der Stellplätze (18, 20) mit einer elektrischen Heizvorrichtung versehen ist.

12. Kombination einer Speisentransporteinheit (10) nach einem oder mehreren der Ansprüche 1 bis 11 und mindestens eines Geschirrteils (22, 24, 26), **dadurch gekennzeichnet, daß** die Unterseite der auf das Tablett aufgesetzten Tablettabdeckung (14) zur abdichtenden Anlage gegen einen oberen Rand des im Bereich des Fluid-Strömungskanals (30) plazierten Geschirrteils ausgebildet ist.

13. Kombination einer Speisentransporteinheit (10) nach einem oder mehreren der Ansprüche 1 bis 11 und mindestens eines Geschirrteils (22, 26), **dadurch gekennzeichnet, daß** das mindestens eine Geschirrteil mit einer elektrischen Heizvorrichtung versehen ist.

14. Kombination mindestens einer Speisentransporteinheit (10) nach einem oder mehreren der Ansprüche 1 bis 11 und eines Speisentransportwagen (50) mit einem ungefähr quaderförmigen Aufnahmeraum für übereinander im Abstand voneinander angeordnete Fachböden zum Abstellen von jeweils mindestens einer der Speisentransporteinheiten, **dadurch gekennzeichnet, daß** der Speisentransportwagen versehen ist mit
(a) einem Kältemittelkreislauf, welcher einen Wärmetauscher zur Kühlung des die Fluid-Strömungskanäle (30) der Speisentransporteinheiten durchströmenden Fluids enthält;
(b) einen Fluid-Vorlaufkanal (38) für kühles Fluid mit Anschlußvorrichtungen für die Fluideinlässe (35) der Speisentransporteinheiten;
(c) einen Fluid-Rücklaufkanal (40) mit Anschlußvorrichtungen für die Fluidauslässe (36) der Speisentransporteinheiten, sowie
(d) eine Fluid-Fördervorrichtung (64) zum Umwälzen des Fluids in einem den Vorlaufkanal, den Rücklaufkanal und die Fluid-Strömungskanäle der Speisentransporteinheiten umfassenden Fluidkreislauf, in dem der Wärmetauscher stromaufwärts des Vorlaufkanals angeordnet ist.

15. Kombination nach Anspruch 14, **dadurch gekennzeichnet, daß** die Anschlußvorrichtungen als Steckverbindungen (46, 48) ausgebildet sind.

16. Kombination nach Anspruch 14 oder 15, **dadurch gekennzeichnet, daß** der Fluidkreislauf ein Kühlluftkreislauf ist.

## Claims

1. Food transport unit comprising a food tray (12) and a hood-like tray cover (14), wherein the food tray has a plurality of defined locations (16, 18, 20) for depositing in each case one plate- or bowl-shaped tableware item (22, 24, 26) provided for receiving food and the food transport unit (10) comprises means of controlling the temperature of at least some of the food, which means comprise at least one fluid flow channel (30), wherein the food tray and the hood-like tray cover form a housing of the food transport unit and the at least one fluid flow channel is integrated into the housing and the food tray has at least one first location (16) for food that is to be eaten cold as well as at least one second location (18, 20) for food that is to be eaten hot and the tray cover at its underside has at least one downwardly protruding, barrier-like and heat-insulating projection (32), which extends between the first and the second location, **characterized in that** the fluid flow channel (30) comprises two channel portions (30a, 30b), wherein the first location (16) for food that is to be eaten cold and the second location (18, 20) for food that is to be eaten hot are disposed in each case in one of the channel portions (30a, 30b) and a fluid, which flows through the food transport unit (10), flows successively through the two channel portions (30a, 30b).

2. Food transport unit according to claim 1, **characterized in that** the fluid flow channel (30) is integrated into the tray cover (14) and, when the tray cover is placed onto the tray (12), extends over at least the first and the second location (16, 18, 20).

3. Food transport unit according to claim 1 or 2, **characterized by** a fluid inlet (35) and a fluid outlet (36), which are connected to one another by the fluid flow channel (30) .

4. Food transport unit according to claims 2 and 3, **characterized in that** fluid inlet (35) and fluid outlet (36) are provided in the tray cover (14).

5. Food transport unit according to one or more of claims 2 to 4, **characterized in that** the tray cover (14) is made at least substantially of a heat-insulating material.

6. Food transport unit according to claim 5, **characterized in that** the tray cover (14) is a foam plastics moulded part.

7. Food transport unit according to one or more of claims 1 to 6, **characterized in that** the food tray (12) is made at least substantially of a heat-insulating material.

8. Food transport unit according to one or more of claims 2 to 7, **characterized in that**, with tableware items (22, 24, 26) that are sealed in a fluidtight manner at the top, the fluid flow channel (30) of the tray cover (14) is fashioned as a downwardly open channel which, at least in the region of the location (16, 18, 20) for a tableware item for food that is to be temperature-controlled, has a greater cross section than said tableware item.

9. Food transport unit according to one of claims 1 to 8, **characterized in that** the barrier-like projection (32) forms a side wall region of the fluid flow channel (30).

10. Food transport unit according to one or more of claims 1 to 9, **characterized in that** the at least one fluid flow channel (30) runs past all of the locations (16, 18, 20).

11. Food transport unit according to one or more of claims 1 to 10, **characterized in that** at least one of the locations (18, 20) is provided with an electric heating device.

12. Combination of a food transport unit (10) according to one or more of claims 1 to 11 and at least one tableware item (22, 24, 26), **characterized in that** the underside of the tray cover (14) placed onto the tray is designed for sealing abutment with an upper edge of the tableware item positioned in the region of the fluid flow channel (30) .

13. Combination of a food transport unit (10) according to one or more of claims 1 to 11 and at least one tableware item (22, 26), **characterized in that** the at least one tableware item is provided with an electric heating device.

14. Combination of at least one food transport unit (10) according to one or more of claims 1 to 11 and a food trolley (50) having an approximately cuboid shaped receiving area for compartment bases, which are disposed spaced-apart one on top of the other, for depositing in each case at least one of the food transport units, **characterized in that** the food trolley is provided with
a) a refrigerant circuit, which contains a heat exchanger for cooling the fluid flowing through the fluid flow channels (30) of the food transport units;
b) a fluid flow channel (38) for cool fluid having connection devices for the fluid inlets (35) of the food transport units;
c) a fluid return channel (40) having connection devices for the fluid outlets (36) of the food transport units, as well as
d) a fluid feed device (64) for circulating the fluid in a fluid circuit, which comprises the flow channel, the return channel and the fluid channels of the food transport units and in which the heat exchanger is disposed upstream of the flow channel.

15. Combination according to claim 14, **characterized in that** the connection devices take the form of plug-in connections (46, 48).

16. Combination according to claim 14 or 15, **characterized in that** the fluid circuit is a cooling air circuit.

## Revendications

1. Unité de transport de repas comportant un plateau pour repas (12) et un capot en forme de hotte (14) de recouvrement du plateau, le plateau pour repas comportant plusieurs emplacements définis de rangement (16, 18, 20) pour ranger respectivement un article de vaisselle en forme de cuvette ou de coupe (22, 24, 26) destiné à recevoir les aliments, et l'unité (10) pour le transport de repas comportant des moyens pour mettre en température au moins une partie des aliments et qui comprennent au moins un canal (30) d'écoulement de fluide, le plateau pour repas et le capot en forme de hotte de recouvrement du plateau formant un boîtier de l'unité de transport de repas et ledit au moins un canal d'écoulement de fluide étant intégré dans le boîtier, et
le plateau pour repas comporte au moins un premier emplacement de rangement (16) pour des aliments devant être consommés froids, ainsi qu'au moins un second emplacement de rangement (18, 20) pour des aliments devant être consommés chauds, et le capot de recouvrement du plateau comporte, au niveau de sa face inférieure, au moins une partie saillante (32) en forme de barrière thermo-isolante qui fait saillie vers le bas et qui s'étend entre les premier et second emplacements de rangement, **caractérisée en ce que** le canal (30) d'écoulement de fluide comprend deux sections (30a, 30b), le premier emplacement de rangement (16) des aliments devant être consommés froids et le second emplacement de rangement (18, 20) pour des aliments devant être consommés chauds étant disposés dans respectivement l'une des sections (30a, 30b) du canal, les deux sections (30a, 30b) du canal sont parcourues successivement par un fluide traversant l'unité (10) pour le transport de repas.

2. Unité pour le transport de repas selon la revendication 1, **caractérisée en ce que** le canal (30) d'écoulement de fluide est intégré dans le capot (14) de recouvrement du plateau et, dans le cas où le capot de recouvrement du plateau est posé sur le plateau (12), s'étend au-dessus d'au moins les premier et second emplacements de rangement (16, 18, 20).

3. Unité pour le transport de repas selon la revendication 1 ou 2, **caractérisée par** une entrée (35) pour le fluide et une sortie (36) pour le fluide, qui sont reliées entre elles par l'intermédiaire du canal (30) d'écoulement de fluide.

4. Unité pour le transport de repas selon les revendications 2 et 3, **caractérisée en ce que** l'entrée (35) pour le fluide et la sortie (36) pour le fluide sont prévues dans le capot (14) de recouvrement du plateau.

5. Unité pour le transport de repas selon une ou plusieurs des revendications 2 à 4, **caractérisée en ce que** le capot (14) de recouvrement du plateau est constitué au moins essentiellement par un matériau thermiquement isolant.

6. Unité pour le transport de repas selon la revendication 5, **caractérisée en ce que** le capot de recouvrement de la tablette est une pièce moulée en matière plastique à l'état de mousse.

7. Unité pour le transport de repas selon une ou plusieurs des revendications 1 à 6, **caractérisée en ce que** le plateau pour repas (12) est constitué au moins essentiellement par une matière plastique thermiquement isolante.

8. Unité pour le transport de repas selon une ou plusieurs des revendications 2 à 7, **caractérisée en ce que** dans le cas d'éléments de vaisselle (22, 24, 26) fermés d'une manière étanche aux fluides à leur partie supérieure, le canal (30) d'écoulement de fluide du capot (14) de recouvrement du plateau est agencé sous la forme d'un canal ouvert vers le bas, qui, au moins dans la zone de l'emplacement de rangement (16, 18, 20) pour un article de vaisselle pour des aliments devant être mis en température, possède une section transversale supérieure à celle de cette partie de cet article de vaisselle.

9. Unité pour le transport de repas selon l'une des revendications 1 à 8, **caractérisée en ce que** la partie saillante en forme de barrière (32) forme une partie de paroi latérale du canal d'écoulement de fluide (30).

10. Unité pour le transport de repas selon une ou plusieurs des revendications 1 à 9, **caractérisée en ce que** le au moins un canal d'écoulement de fluide (30) passe à côté de tous les emplacements de rangement (16, 18, 20).

11. Unité pour le transport de repas selon une ou plusieurs des revendications 1 à 10, **caractérisée en ce qu'**au moins l'un des emplacements de rangement (18, 20) comporte un dispositif de chauffage électrique.

12. Ensemble combiné de l'unité (10) de transport pour repas selon une ou plusieurs des revendications 1 à 11 et au moins un article de vaisselle (22, 24, 26), **caractérisée en ce que** la face inférieure du capot (14) de recouvrement du plateau posé sur le plateau est réalisée de manière à s'appliquer de façon étanche contre un bord supérieur de l'article de vaisselle placé dans la zone du canal d'écoulement de fluide (30).

13. Ensemble combiné d'une unité (10) pour le transport de repas selon une ou plusieurs des revendications 1 à 11 et d'au moins un article de vaisselle (22, 26), **caractérisée en ce que** le au moins un article de vaisselle est pourvu d'un dispositif de chauffage électrique.

14. Ensemble combiné comprenant au moins une unité (10) pour le transport de repas selon une ou plusieurs des revendications 1 à 11 et un chariot (50) pour le transport de repas, comportant un espace de logement de forme approximativement parallélépipédique pour des fonds superposés à distance les uns des autres pour le rangement respectivement d'au moins l'une des unités pour le transport de repas, **caractérisé en ce que** le chariot pour le transport de repas comporte
(a) un circuit de fluide de refroidissement, qui contient un échangeur de chaleur pour refroidir le fluide qui s'écoule dans les canaux d'écoulement de fluide (30) des unités pour le transport de repas;
(b) un canal aller de circulation de fluide (38) pour le fluide froid, comportant des dispositifs de raccordement pour les entrées (35) de fluide des unités pour le transport de repas;
(c) un canal de retour de fluide (40) comportant des dispositifs de raccordement pour les sorties (36) pour le fluide des unités de transport pour repas; et
(d) un dispositif d'entraînement de fluide (64) pour faire circuler le fluide dans un circuit de fluide, qui comprend le canal aller, le canal de retour et les canaux d'écoulement de fluide des unités pour le transport de repas et dans lequel l'échangeur de chaleur est disposé en amont du canal aller.

15. Ensemble combiné selon la revendication 14, **caractérisé en ce que** les dispositifs de raccordement sont agencés sous la forme de raccords à enfichage (46, 48).

16. Ensemble combiné selon la revendication 14 ou 16, **caractérisé en ce que** le circuit de fluide est un circuit d'air de refroidissement.
